# EUROPÄISCHE PATENTSCHRIFT

(11) **EP 1 532 066 B1**
(45) Veröffentlichungstag und Bekanntmachung des Hinweises auf die Patenterteilung: **03.09.2008**
(21) Anmeldenummer: 03747941.7
(22) Anmeldetag: 28.08.2003
(51) Int. Cl.: B67D 1/12, A47J 31/00, A47J 31/52, A47J 31/40

(54) **ABGABEVORRICHTUNG FÜR GETRÄNKE**
DISPENSING DEVICE FOR DRINKS
DISPOSITIF DISTRIBUTEUR DE BOISSONS

(30) Priorität: 28.08.2002 DE 10239593
(43) Veröffentlichungstag der Anmeldung: 25.05.2005
(73) Patentinhaber: NIRO-PLAN AG, 4663 Aarburg (CH)
(72) Erfinder: GREIWE, Hansdieter, 97944 Boxberg (DE); HERRMANN, Rainer, 97922 Lauda-Königshofen (DE)
(74) Vertreter: Blumenröhr, Dietrich
(86) Internationale Anmeldenummer: PCT/EP2003/009556
(87) Internationale Veröffentlichungsnummer: WO 2004/024615

(56) Entgegenhaltungen:
- EP-A- 0 972 481
- US-A- 4 202 387
- US-A- 4 572 253
- US-A- 4 745 852
- US-A- 5 158 793

## Beschreibung

Die Erfindung betrifft eine Abgabevorrichtung für Getränke oder dergleichen dosierbare fluide Lebensmittel, insbesondere für Kaffee, Milch, Softdrinks oder Suppen.

Abgabevorrichtungen der eingangs genannten Art sind in vielfältiger Form bekannt. Insbesondere in Selbstbedienungsgaststätten oder Kantinen können sich die Kunden ihre Getränke oder auch Suppen (Suppendrinks) selbst am "Automaten" holen, indem sie ein zuvor aus einem Vorratsregal entnommenes Geschirr unter eine Fülleinrichtung stellen und dann eine das gewünschte Getränk bezeichnende Taste betätigen. Diese Vorgehensweise birgt nun einige Nachteile, die insbesondere in Stoßzeiten, z. B. zur Mittagszeit an einer Autobahnraststätte, zu erheblichen Verzögerungen und Unannehmlichkeiten sowohl für den Kunden als auch für den Betreiber der Einrichtung führen.

Zunächst beginnt der Kunde oftmals erst vor der Abgabevorrichtung angelangt mit dem Nachdenken darüber, welches Getränk er eigentlich wirklich will. Ein "Überrunden" durch entschlußfreudigere Kunden ist nicht möglich, da der zögerliche Kunde sein Geschirr oder Glas bereits unter die Fülleinrichtung gestellt hat und somit der nächste Kunde ganz einfach warten muß, bis der zögerliche Kunde endlich einen Entschluß gefaßt hat.

Wenn ein Kunde weiterhin ein falsches Geschirr gewählt hat, z. B. eine Espresso-Tasse, und nun auf den Wahlknopf "Capuccino" drückt, so kommt es unweigerlich zur "Überlaufkatastrophe", die - und dies bedarf sicherlich kaum einer Erklärung - für den Kunden ebenso unangenehm ist wie für den Betreiber der Raststätte.

Die Darstellungsmöglichkeit der verschiedenen, an einer Abgabevorrichtung erhältlichen Getränke- oder auch Suppen auf den dort angebrachten Wahlschaltern ist begrenzt. Insbesondere die Darstellung von Mengen, also z. B. einer kleinen Tasse Espresso im Gegensatz zu einem "Haferl" Kaffee, ist sehr schwierig. Der Kunde, der eine große Tasse unter die Fülleinrichtung stellt und auf seinen Knopfdruck hin lediglich einen Espresso eingefüllt bekommt, ist enttäuscht.

Ein Abgabevorrichtung für getränte wie im Oberbegriff von Anspruch 1 ist bekannt aus der EP 0972 481 A.

Ausgehend vom oben genannten Stand der Technik ist es Aufgabe der vorliegenden Erfindung, eine Abgabevorrichtung für Getränke oder dergleichen dosierbar fluide Lebensmittel aufzuzeigen, weiche in einfacher Weise die Benutzbarkeit verbessert und erleichtert.

Diese Aufgabe wird durch eine Abgabevorrichtung für Getränke oder dergleichen dosierbare fluide Lebensmittel, insbesondere für Kaffee, Milch, Softdrinks, Suppen dadurch gelöst, dass eine Erkennungseinrichtung zum ***Unterscheiden*** von einander verschiedenen Geschirren zur Aufnahme des Lebensmittels mit anschließendem Verzehr aus dem Geschirr und zum Abgeben eines das Geschirr bezeichnenden Erkennungssignals und eine Ventileinrichtung umfasst, die ***abhängig*** ***von dem*** Erkennungssignal hin mindestens eine von mehreren Zuliefereinrichtungen zum Zuliefern eines bestimmten Lebensmittels oder einer Mischung bestimmter Lebensmittel mit einer Fülleinrichtung verbindet und ***die abhängig von dem Erkennungssignal mittels der Fülleinrichtung*** eine vorbestimmte Menge des bestimmten Lebensmittels oder der Mischung in das Geschirr füllt. Die Erkennungseinrichtung umfasst Sensormittel zum Abtasten von Formmerkmalen und zum Feststellen des Gewichtes des Geschirrs ***und die Erkennungseinrichtung ist derart ausgeführt, dass sie abhängig von den abgetasteten Formmerkmalen und abhängig von dem festgestellten Gewicht das das Geschirr bezeichnende Erkennungssignal an die Ventileinrichtung abgibt.***

Ein wesentlicher Punkt der Erfindung liegt darin, dass die Auswahl des Lebensmittels bereits mit der Auswahl des Geschirres geschieht, das der Kunde aus den Vorratsregalen entnimmt. Dadurch, dass das Geschirr immer mit demselben Lebensmittel gefüllt wird, kann es auch nicht zu einer Überlaufkatastrophe kommen, da nicht nur die Art sondern auch die Menge des Lebensmittels, die abgegeben wird, durch das Geschirr selbst bestimmt ist. Weiterhin können entscheidungsschwache Kunden ohne weiteres und auch ohne unhöflich zu sein, überrundet werden, da die Abgabevorrichtung ja nicht durch sie blockiert wird. Dadurch, dass die Formmerkmale und das Gewicht des Geschirrs, d.h. eine Kombination dieser beiden Messgrößen, erfasst wird, müssen keine gesonderten Erkennungseinrichtungen (zum Beispiel Barcodestreifen oder dergleichen) vorgesehen werden. Der Gaststättenbetreiber kann also mit seinem vorhandenen Geschirr weiterarbeiten, ohne dies verändern zu müssen.

Als Form-Merkmale zum Erkennen des Geschirrs können zum Beispiel die maximale Höhe und die maximale Breite des Geschirrs oder aber besondere Geschirrformen dienen, zum Beispiel die unterschiedliche Tassenform für einen Espresso und ein "Haferl" Kaffee. Ähnliches gilt für die Gewichtsmerkmale des Geschirrs. Die Kombination der Merkmale "Form" und "Gewicht" ist von besonderem Vorteil, da hierdurch eine erhöhte Erkennungssicherheit gewährleistet ist.

Schließlich ist es auch sehr viel einfacher, auf einem Geschirr das Lebensmittel in Schrift und Bild darzustellen, welches der Kunde aufgrund seiner Geschirrwahl bekommt. Es kann ihm nicht passieren, daß er Milchkaffee erhält, wenn er eine Suppentasse in die Abgabevorrichtung stellt.

Vorzugsweise umfaßt die Erkennungseinrichtung einen programmierbaren Speicher, in welchem zu verschiedenen Erkennungssignalen entsprechende Mengensignale und wahlsignale zum Bestimmen der Lebensmittel gespeichert sind. Derartige Speicher sind kostengünstig erhältlich und auch programmierbar.

Besonders bevorzugterweise umfaßt die Erkennungseinrichtung zusätzlich eine Leseeinrichtung zum Lesen einer auf dem Geschirr angebrachten Information, wobei dieser Lesevorgang optisch (z. B. über einen Strichcode) oder elektromagnetisch (z. B. über einen Transponder oder einen Magnetstreifen) erfolgen kann. In diesem Fall können auch identisch geformte Geschirre mit identischem Gewicht verwendet werden, welche für den Kunden erkennbare bildliche Informationen tragen.

Vorzugsweise ist die Erkennungseinrichtung zur Abgabe eines Startsignals ausgebildet, welches die Ventileinrichtung zum Füllen des Geschirrs dann freigibt, wenn das Geschirr in einer vorbestimmten Position zur Fülleinrichtung ausgerichtet ist. Dadurch kann es nicht mehr passieren, daß das Geschirr unsorgfältig abgestellt wird und das erwartete Getränk daneben läuft und zwar ohne daß komplizierte Justiermechanismen zum Aufnehmen des Geschirrs in der korrekten Position vorgesehen werden.

Vorzugsweise ist ein manuell betätigbarer Startschalter zum Abgeben eines Startsignals vorgesehen, welches einen Füllvorgang beginnen läßt. Der Kunde hat dadurch das Gefühl, immer noch "Herr der Lage" zu sein und wird nicht durch einen plötzlichen Start des Abgabevorgangs überrascht.

Die Fülleinrichtung ist vorzugsweise zur gleichzeitigen Abgabe des Lebensmittels in zwei (oder auch mehr) Geschirre ausgebildet, wobei die Erkennungseinrichtung zur Abgabe von Positionssignalen ausgebildet und die Fülleinrichtung steuernd derart angebracht ist, daß je nach Anwesenheit von ein oder zwei (oder mehr) Geschirren diese gefüllt werden. Es muß der gestreßte Familienvater, der für seine drei Kinder das obligatorische Cola beschafft, nicht mehr drei Füllvorgänge bewältigen, er kann vielmehr seine Aufgabe in einem einzigen Schritt abarbeiten. Die sonst komplizierte Betätigung verschiedener Schalter an der Abgabevorrichtung entfällt gänzlich.

Vorzugsweise umfaßt die Erkennungseinrichtung einen Füllstandssensor, über welchen ein für das Geschirr maximaler Füllstand im Geschirr beim Einfüllen des Lebensmittels einstellbar ist. Auf diese Weise ist sichergestellt, daß bereits der Versuch, eine übermäßige Menge des gewünschten Getränkes in ein dafür nicht geeignetes Geschirr zu füllen, unterbunden wird. Dadurch ist nicht nur eine Übervorteilung des Gastwirtes sondern auch eine Überlaufkatastrophe und Überschwappen des Getränks während des anschließenden Transports wirksam verhindert.

Vorzugsweise ist eine Lerneinrichtung mit einer manuell betätigbaren Abgabesteuerung zur Abgabe des Lebensmittels in ein Geschirr und zum Speichern von Füllmengen und/oder Füllstandsdaten in Abhängigkeit von einem Erkennungssignal vorgesehen. Dadurch ist der Betreiber nicht an bestimmte, vom Hersteller der Abgabevorrichtung zur Verfügung gestellte Geschirre gebunden, er kann vielmehr mit seinem eigenen Geschirrvorrat arbeiten und die Abgabevorrichtung auf die Geschirre hinsichtlich der einzufüllenden Lebensmittelmengen einstellen. Vorzugsweise ist eine (ggf. zusätzliche) Lerneinrichtung zum Eingeben von Bestimmungsdaten für ein bestimmtes Lebensmittel in Abhängigkeit von einem Erkennungssignal vorgesehen, so daß der Betreiber lediglich das von ihm für ein bestimmtes Lebensmittel vorgesehene Geschirr wie eine Kunde in die Abgabevorrichtung stellt und das entsprechende Lebensmittel wählt bzw. einprogrammiert. Die Lernvorrichtung (oder eine weitere Lernvorrichtung) ist vorzugsweise weiterhin dahingehend ausgebildet, dass nacheinander verschiedene Geschirre den Sensoreinrichtungen zum Abtasten der Formmerkmale und der Gewichtsmesseinrichtung zugeführt werden, so dass definiert werden kann, zu welcher Formmerkmal/Gewichtskombination ein bestimmtes Geschirr gehört. Jedem Geschirr kann dann zum Beispiel eine "Kennziffer" zugeordnet werden, welche (ebenfalls über die Lernvorrichtung) dann mit einer bestimmten Befüllungsmenge und mit einem bestimmten Getränk verbunden ist. So ist es ganz einfach möglich, aus dem Bestand einer Gaststätte auch verschiedene Geschirrtypen bestimmten, gleichen Inhalten zuzuordnen, zum Beispiel weil eine Nachbeschaffung eines bestimmten Geschirrtyps nicht möglich ist.

Ein weiterer Vorteil ergibt sich durch die erfindungsgemäße Lösung der Form/Gewichtsabtastung dadurch, dass ein und dieselben Sensoren für verschiedene Zwecke benützt werden können. Zum einen wird durch die Sensoren die korrekte Position des Geschirrs beim Befüllen, zum anderen der Füllzustand und zum dritten eben die Identifizierung des Geschirrs vorgenommen.

Nachfolgend wird die Erfindung anhand von Abbildungen näher erläutert. Hierbei zeigen
- Figur 1 eine schematisierte Darstellung einer Ausführungsform der erfindungsgemäßen Abgabevorrichtung und
- Figur 2 einen Ausschnitt aus Figur 1 mit einer modifizierten Fülleinrichtung zum gleichzeitigen Befüllen mehrerer Geschirre.

In der nachfolgenden Beschreibung werden für gleiche und gleichwirkende Teile dieselben Bezugsziffern verwendet.

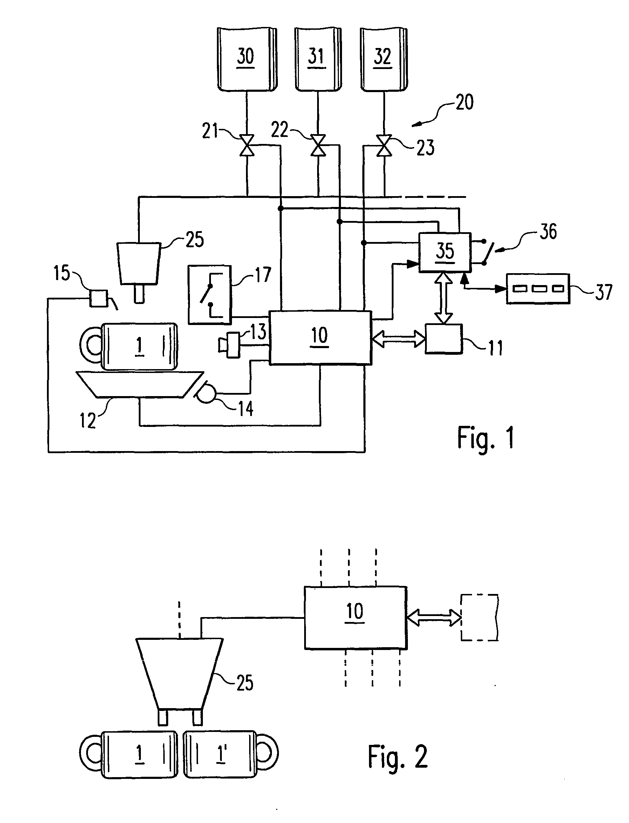

In Figur 1 ist eine Abgabevorrichtung gezeigt, bei der ein Geschirr 1 auf einer Waage 12 steht, die unter einer Fülleinrichtung 25 in einer Position derart angebracht ist, daß ein aus der Fülleinrichtung 25 ausströmendes Lebensmittel in das Geschirr gelangt. Die Waage 12 ist zur Weitergabe ihrer Gewichtsausgangssignale mit einer Erkennungseinrichtung 10 verbunden, der neben den Gewichtssignalen noch Ausgangssignale aus einer optischen Erkennungseinrichtung 13, z. B. einer Kamera, einem Codeleser 14 und einem Füllstandssensor 15 zugeführt werden. Die Kamera 13 kann dazu dienen, daß in der Erkennungseinrichtung 10 gleichzeitig mit Form-Merkmalen des Geschirrs 1 auch dessen Position festgestellt wird, um sicherzustellen, daß das Lebensmittel aus der Fülleinrichtung 25 wirklich in das Geschirr 1 gelangt. Dann, wenn die Erkennungseinrichtung 10 aufgrund der ihr zugeführten Sensorsignale feststellt, welches Geschirr unter der Fülleinrichtung 25 steht und ob das Geschirr auch richtig positioniert ist, erzeugt sie ein Freigabesignal für Ventileinrichtungen 20, welche über einzelne Ventile 21, 22 und 23 mit Zuliefereinrichtung 30, 31 und 32 stromauf- und stromabwärts mit der Fülleinrichtung 25 verbunden sind. Dieses Freigabesignal wird jedoch solange blockiert, bis der Kunde einen Startschalter 17 betätigt. Erst auf dieses Startsignal hin wird das Geschirr 1 durch die Fülleinrichtung 25 gefüllt.

Weiterhin ist ein Speicher 11 mit der Erkennungseinrichtung 10 derart verbunden, daß auf die Erkennungssignale hin, welche aufgrund der Signale aus den Sensoren 12 bis 14 gewonnen werden, eine Auswahl und Mengenbestimmung des durch die Geschirrvorgabe bestimmten Lebensmittels erfolgt. Wenn beispielsweise die Zuliefereinrichtung 30 Espresso und die Zuliefereinrichtung 31 Milch liefern, wird je nach Wahl eines bestimmten Geschirrs 1 nur Espresso oder eine Mischung aus Espresso und Milch für einen Capuccino oder einen Latte Macchiato abgegeben. Die Bestimmung erfolgt hierbei in der Erkennungseinrichtung 10 aufgrund der im Speicher 11 abgelegten Daten.

Weiterhin ist bei der in Figur 1 gezeigten Ausführungsform der Erfindung eine Lerneinrichtung 35 mit einer Tastatur 37 vorgesehen, welche darüber hinaus einen Schalter 36 (der natürlich auch in der Tastatur 37 angebracht sein kann) umfaßt. Mittels dieser Lerneinrichtung 35 kann der Betreiber ein von ihm vorbestimmtes, ansonsten aber ohne besondere Eigenschaften ausgestattetes Geschirr 1 wie ein Kunde in die Abgabevorrichtung stellen und den in der Erkennungseinrichtung 10 erzeugten Erkennungssignalen eine bestimmte Information, insbesondere Art und Menge des abzugebenden Lebensmittels zuweisen. Mittels des Schalters 36 kann er die Ventileinrichtungen 20 hierbei so steuern, daß die von ihm vorgesehene Lebensmittelmenge eingefüllt wird. Er kann auch eine Maximalmenge, die durch den Füllstandssensor 15 abgetastet wird, vorbestimmen.

In Figur 2 ist eine Abgabevorrichtung mit einer Fülleinrichtung 25 gezeigt, welche zur gleichzeitigen Abgabe in zwei (identische) Geschirre 1 und 1' ausgebildet ist. Die in Figur 1 bereits beschriebenen Sensoren, insbesondere die optische Erfassungseinrichtung 13 sind auch hier vorgesehen, so daß auf ein entsprechendes Erkennungssignal hin die Erkennungseinrichtung 10 beide Auslässe der Fülleinrichtung 25 dann ansteuert, wenn zwei Geschirre untergestellt wurden und nur einen (natürlich den richtigen) Auslaß ansteuert, wenn nur ein einziges Geschirr unter der Fülleinrichtung 25 steht.

Aus obigem geht hervor, daß die Erfindung auch dann Anwendung finden kann, wenn eine mit den notwendigen technischen Einrichtungen versehene Kaffeemaschine in der erfindungsgemäßen Art und Weise betrieben wird. Die Erfindung umfaßt somit auch ein besonderes Verfahren zum Betrieb einer Abgabevorrichtung.

### Bezugszeichenliste

- 1: Geschirr
- 10: Erkennungseinrichtung
- 11: Speicher
- 12: Waage
- 13: Kamera
- 14: Codeleser
- 15: Füllstandssensor
- 17: Startschalter
- 20: Ventileinrichtung
- 21: 1. Ventil
- 22: 2. Ventil
- 23: 3. Ventil
- 25: Fülleinrichtung
- 30: Zuliefereinrichtung
- 31: Zuliefereinrichtung
- 32: Zuliefereinrichtung
- 35: Lerneinrichtung
- 36: Schalter
- 37: Tastatur

## Patentansprüche

1. Abgabevorrichtung für Getränke oder dergleichen dosierbare fluide Lebensmittel, insbesondere Kaffee, Milch, Softdrinks, Suppen, umfassend:
- eine Erkennungseinrichtung (10) zum ***Unterscheiden*** voneinander verschiedener Geschirre (1) zur Aufnahme des Lebensmittels mit anschließendem Verzehr aus dem Geschirr und zum Abgeben eines das Geschirr bezeichnenden Erkennungssignals und
- eine Ventileinrichtung (20), die ***abhängig von dem*** Erkennungssignal mindestens eine von mehreren Zuliefereinrichtungen (30 bis 32) zum Zuliefern eines bestimmten Lebensmittels oder einer Mischung bestimmter Lebensmittel mit einer Fülleinrichtung (25) verbindet und ***die*** ***abhängig von dem Erkennungssignal mittels der Fülleinrichtung*** eine vorbestimmte Menge des vorbestimmten Lebensmittels oder der Mischung von Lebensmitteln in das Geschirr (1) füllt,
***dadurch gekennzeichnet,***
***dass*** die Erkennungseinrichtung Sensormittel (12, 13) zum Abtasten von Formmerkmalen und zum Feststellen des Gewichts eines Geschirrs (1) umfasst, ***und die Erkennungseinrichtung derart ausgeführt ist, dass sie abhängig von den abgetasteten Formmerkmalen und abhängig von dem festgestellten Gewicht das das Geschirr bezeichnende Erkennungssignal an die Ventileinrichtung (20) abgibt.***

2. Abgabevorrichtung nach Anspruch 1,
**dadurch gekennzeichnet,**
**dass** die Erkennungseinrichtung (10) einen programmierbaren Speicher (11) umfasst, in welchem verschiedene Erkennungssignale entsprechende Mengensignale und/oder Wahlsignale zum Bestimmen der Lebensmittel gespeichert sind.

3. Abgabevorrichtung nach einem der vorhergehenden Ansprüche,
**dadurch gekennzeichnet,**
**dass** die Erkennungseinrichtung (10) Leseeinrichtungen (14) zum Lesen einer auf dem Geschirr (1) angebrachten Information umfasst.

4. Abgabevorrichtung nach einem der vorhergehenden Ansprüche,
**dadurch gekennzeichnet,**
**dass** die Erkennungseinrichtung (10) eine elektromagnetische Leseeinrichtung (14) zum Lesen einer auf dem Geschirr (1) angebrachten Information auf einem Transponder oder einem Magnetstreifen umfasst.

5. Abgabevorrichtung nach einem der vorhergehenden Ansprüche,
**dadurch gekennzeichnet,**
**dass** die Erkennungseinrichtung (10) zur Abgabe eines Startsignals ausgebildet ist, welches die Ventileinrichtung (20) zum Füllen des Geschirrs (1) dann freigibt, wenn das Geschirr (1) in einer vorbestimmten Position zur Fühleinrichtung (25) ausgerichtet ist.

6. Abgabevorrichtung nach einem der vorhergehenden Ansprüche,
**gekennzeichnet durch**
einen manuell betätigbaren Schalter (17) zum Abgeben eines Startsignals, welches einen Füllvorgang beginnen lässt.

7. Abgabevorrichtung nach einem der vorhergehenden Ansprüche,
**dadurch gekennzeichnet,**
**dass** die Fülleinrichtung (25) zur gleichzeitigen Abgabe des Lebensmittels in zwei Geschirre (1, 1') ausgebildet ist, dass die Erkennungseinrichtung (10) zur Abgabe von Positionssignalen ausgebildet und die Fülleinrichtung (25) steuernd angebracht ist, so dass je nach Anwesenheit von ein oder zwei Geschirren diese gefüllt werden.

8. Abgabevorrichtung nach einem der vorhergehenden Ansprüche,
**dadurch gekennzeichnet,**
**dass** die Erkennungseinrichtung (10) einen Füllstandssensor (15) umfasst, über weichen ein für das Geschirr (1) maximaler Füllstand im Geschirr beim Einfüllen des-Lebensmittels einstellbar ist.

9. Abgabevorrichtung nach einem der vorhergehenden Ansprüche,
**gekennzeichnet durch**
eine Lerneinrichtung (35) mit einer manuell betätigbaren Abgabesteuerung zum Abgeben eines Lebensmittels in ein Geschirr (1) und zum Speichern von Füllmenge und/oder Füllstandsdaten in Abhängigkeit von einem Erkennungssignal.

10. Abgabevorrichtung nach einem der vorhergehenden Ansprüche,
**gekennzeichnet durch**
eine Lerneinrichtung (35) zum Eingeben von Bestimmungsdaten für ein bestimmtes Lebensmittel in Abhängigkeit von einem Erkennungssignal.

## Claims

1. Dispensing device for drinks or the like liquid foodstuffs which can be dispensed in metered quantities, in particular coffee, milk, soft drinks, soups comprising:
- an identification means (10) for distinguishing from one another various containers (1) for receiving the foodstuff for subsequent consumption from the container and for emitting an identification signal which specifies the container, and
- a valve means (20) by which, as a function of the identification signal, at least one of plurality of supply means (30 to 32) for supplying a specific foodstuff or a mixture of specific foodstuffs is connected to a filling means (25) and which, as a function of the identification signal, fills the container (1) with a predetermined quantity of the specified foodstuff or mixture of foodstuffs by means of the filling means,
**characterised in that** the identification means comprises sensor means (12, 13) for detecting shape characteristics and for determining the weight of a container (1), and the identification means is designed in such a way that as a function of the detected shape characteristics and as a function of the determined weight it emits an identification signal to the valve means (20) to specify the container.

2. Dispensing device as claimed in Claim 1, **characterised in that** the identification means (10) comprises a programmable memory in which are stored various quantity signals and/or selection signals corresponding to identification signals for specifying the foodstuffs.

3. Dispensing device as claimed in any one of the preceding claims, **characterised in that** the identification means (10) comprises reading means (14) for reading information applied to the container (1).

4. Dispensing device as claimed in any one of the preceding claims, **characterised in that** the identification means (10) comprises an electromagnetic reading means (14) for reading information applied to the container (1) on a transponder or a magnetic strip.

5. Dispensing device as claimed in any one of the preceding claims, **characterised in that** the recognition means (10) is designed to emit a start signal which releases the valve means (20) for filling the container (1) when the container (1) is oriented in a predetermined position with respect to the filling means (25).

6. Dispensing device as claimed in any one of the preceding claims, **characterised by** a manually actuatable switch (17) for emitting a start signal which causes a filling process to begin.

7. Dispensing device as claimed in any one of the preceding claims, **characterised in that** the filling means (25) is designed for simultaneously dispensing the foodstuff into two containers (1, 1'), that the identification means (10) is designed to emit position signals, and the filling means (25) is controlled so that one or two containers are filled depending on how many are present.

8. Dispensing device as claimed in any one of the preceding claims, **characterised in that** the identification means (10) comprises a filling level sensor (15) by means of which a maximum filling level for the container (1) can be set during filling of the container with the foodstuff.

9. Dispensing device as claimed in any one of the preceding claims, **characterised by** a learning means (35) with a manually actuatable dispensing control for dispensing a foodstuff into a container (1) and for storing in the memory data relating to the quantity and filling level as a function of an identification signal.

10. Dispensing device as claimed in any one of the preceding claims, **characterised by** a learning means (35) for entering specification data for a specific foodstuff as a function of an identification signal.

## Revendications

1. Dispositif distributeur de boissons ou d'aliments fluides dosables analogues, notamment de café, de lait, de boissons gazeuses, de soupes, comprenant :
- une unité d'identification (10) pour différencier les uns des autres différents récipients (1) destinés à recevoir l'aliment, avec consommation subséquente de l'aliment à partir du récipient, et pour délivrer un signal d'identification définissant le type de récipient, et
- un système de soupape (20) qui, en fonction du signal d'identification, relie à une unité de remplissage (25) au moins une de plusieurs unités d'approvisionnement (30 à 32) destinées à délivrer un aliment déterminé ou un mélange d'aliments déterminés, et qui, en fonction du signal d'identification et au moyen de l'unité de remplissage, remplit le récipient (1) avec une quantité prédéterminée de l'aliment prédéterminé ou du mélange d'aliments,
**caractérisé en ce que** l'unité d'identification comprend des moyens de détection (12, 13) pour analyser des caractéristiques de forme et pour déterminer le poids d'un récipient (1), et l'unité d'identification est conçue de telle sorte qu'elle délivre au système de soupape (20) le signal d'identification définissant le type de récipient en fonction des caractéristiques de forme analysées et en fonction du poids déterminé.

2. Dispositif distributeur selon la revendication 1, **caractérisé en ce que** l'unité d'identification (10) comprend une mémoire programmable (11) dans laquelle sont mémorisés, afin de déterminer les aliments, des signaux de quantité et/ou des signaux de sélection correspondant à différents signaux d'identification.

3. Dispositif distributeur selon l'une des revendications précédentes, **caractérisé en ce que** l'unité d'identification (10) comprend des moyens de lecture (14) pour lire une information apposée sur le récipient (1).

4. Dispositif distributeur selon l'une des revendications précédentes, **caractérisé en ce que** l'unité d'identification (10) comprend un moyen de lecture électromagnétique (14) pour lire une information apposée sur le récipient (1) sur un transpondeur ou une bande magnétique.

5. Dispositif distributeur selon l'une des revendications précédentes, **caractérisé en ce que** l'unité d'identification (10) est conçue pour délivrer un signal de démarrage qui autorise le système de soupape (20) à remplir le récipient (1) si le récipient (1) est orienté dans une position prédéfinie par rapport à l'unité de remplissage (25).

6. Dispositif distributeur selon l'une des revendications précédentes, **caractérisé par** un commutateur (17) à actionnement manuel pour délivrer un signal de démarrage qui autorise le démarrage d'un processus de remplissage.

7. Dispositif distributeur selon l'une des revendications précédentes, **caractérisé en ce que** l'unité de remplissage (25) est conçue pour distribuer en même temps l'aliment dans deux récipients (1, 1'), et **en ce que** l'unité d'identification (10) est conçue pour délivrer des signaux de position et pour commander l'unité de remplissage (25) de telle sorte que le remplissage concerne un ou deux récipients en fonction de la présence de ceux-ci.

8. Dispositif distributeur selon l'une des revendications précédentes, **caractérisé en ce que** l'unité d'identification (10) comprend un détecteur (15) de niveau de remplissage qui permet de régler dans le récipient, lors du remplissage de l'aliment, un niveau de remplissage maximal pour le récipient (1) concerné.

9. Dispositif distributeur selon l'une des revendications précédentes, **caractérisé par** une unité d'apprentissage (35) avec une commande de distribution à actionnement manuel pour distribuer un aliment dans un récipient (1) et pour mémoriser une quantité de remplissage et/ou des données de niveau de remplissage en fonction d'un signal d'identification.

10. Dispositif distributeur selon l'une des revendications précédentes, **caractérisé par** une unité d'apprentissage (35) pour entrer des données de détermination pour un aliment déterminé en fonction d'un signal d'identification.
